# EUROPEAN PATENT APPLICATION

(11) **EP 4 683 420 A1**
(43) Date of publication of application: **21.01.2026**
(21) Application number: 23927163.8
(22) Date of filing: 28.11.2023
(51) Int. Cl.: H04W 72/541

(54) **FIRST ELECTRONIC DEVICE, SECOND ELECTRONIC DEVICE, AND INFORMATION PROCESSING METHOD**

(30) Priority: 16.03.2023 CN 202310271119
(71) Applicant: Lenovo (Beijing) Limited, Beijing 100085 (CN)
(72) Inventor: WANG, Jianfeng, Beijing 100085 (CN); WANG, Haiming, Beijing 100085 (CN)
(74) Representative: Boult Wade Tennant LLP
(86) International application number: PCT/CN2023/134629
(87) International publication number: WO 2024/187822

(57) **Abstract**

Disclosed in embodiments of the present application is a first electronic device. The first electronic device is a sensing management device and comprises: a first processor, connected to a first transceiver and used for generating a scheduling request; and the first transceiver, used for sending the scheduling request to a second electronic device and receiving first notification information sent by the second electronic device on the basis of the scheduling request, wherein the first processor is further used for generating a sensing signal on the basis of the first notification information; the first transceiver is further used for sending the sensing signal to a third electronic device; the scheduling request carries first configuration information; the first configuration information is used for configuring sensing service interaction between the first electronic device and the third electronic device; the scheduling request is used for requesting the second electronic device to perform communication service scheduling on the basis of the first configuration information; and the first notification information is used for prompting that the communication service scheduling has been completed. Also disclosed in the embodiments of the present application are a second electronic device and an information processing method.

## Description

This application claims priority to Chinese Patent Application No. 202310271119.1, titled "FIRST ELECTRONIC DEVICE, SECOND ELECTRONIC DEVICE, AND INFORMATION PROCESSING METHOD", filed on March 16, 2023 with the China National Intellectual Property Administration, which is incorporated herein by reference in its entirety.

### FIELD OF THE TECHNOLOGY

The present disclosure relates to wireless sensing technology in the field of communications, and in particular to a first electronic device, a second electronic device, and an information processing method.

### BACKGROUND

Wireless sensing technology involves transmitting wireless signals to the environment to be sensed, and collecting the wireless signals that have been reflected and scattered by the environment at the receiving end. Since the collected wireless signals have been affected by the environment, the characteristics of the environment may be obtained by processing the wireless signals after they are received. However, when wireless signals used to sense the environment are received, they are easily interfered with by other signals, resulting in low accuracy in determining the environmental characteristics based on the received signals.

### SUMMARY

In order to solve the above technical problems, the embodiments of the present application hope to provide a first electronic device, a second electronic device and an information processing method, which solves the problem that the receiving end is easily interfered with by other signals when receiving radio signals used to perceive the environment, resulting in low accuracy of environmental characteristics determined based on the received signals.

The technical solution of this application is achieved as follows:

The first electronic device, wherein the first electronic device is a perception management device and includes: a first processor, connected to a first transceiver, and configured to generate a scheduling request; the first transceiver, configured to transmit the scheduling request to a second electronic device and receive first notification information sent by the second electronic device based on the scheduling request; the first processor, further configured to generate a sensing signal based on the first notification information; the first transceiver, further configured to transmit the sensing signal to a third electronic device; the scheduling request carries first configuration information; the first configuration information is used to configure sensing service interaction between the first electronic device and the third electronic device; the scheduling request is used to request the second electronic device to schedule communication services based on the first configuration information; and the first notification information is used to indicate that communication service scheduling is complete.

In another aspect, the first processor is further configured to determine the first configuration information during resource negotiation between the first electronic device and the third electronic device;

The first processor is further configured to generate the scheduling request based on the first configuration information.

In another aspect, the first processor is further configured to obtain location information of the third electronic device;

The first transceiver is further configured to transmit the location information to the second electronic device, so that the second electronic device, based on the location information, determines a fourth electronic device from among a plurality of electronic devices capable of performing communication services with the second electronic device, and schedules communication services between the second electronic device and the fourth electronic device based on the first configuration information.

In another aspect, the first configuration information includes: an identification of a network domain in which the first electronic device and the third electronic device are located, transmission configuration information of the sensing signal, and transmission configuration information of channel state information determined based on the sensing signal.

In another aspect, the identification of the network domain includes an identity document of the sensing domain; the transmission configuration information of the sensing signal includes at least one of a frame number, a superframe number, a transmission period, a duration, a frequency and a bandwidth of a wireless frame used to receive the sensing signal; and the first configuration information also includes location information of the third electronic device.

In another aspect, the first transceiver is further configured to receive a sensing service request;

The first processor is further configured to, based on the sensing service request, determine the third electronic device from a plurality of electronic devices capable of performing sensing service interaction with the first electronic device.

In another aspect, the present disclosure provides a second electronic device, employed as a communication management device. The second electronic device includes: a second transceiver, connected to a second processor, and configured to receive a scheduling request sent by a first electronic device; the second processor, configured to respond to the scheduling request and schedule communication services based on first configuration information; the second transceiver, further configured to transmit first notification information to the first electronic device; the scheduling request carries the first configuration information; the first configuration information is used to configure the sensing service interaction between the first electronic device and a third electronic device; the scheduling request is used to request the second electronic device to schedule communication services based on the first configuration information; and the first notification information is used to indicate that communication service scheduling is complete.

In another aspect, the second transceiver is further configured to receive location information of the third electronic device transmitted by the first electronic device;

The second processor is further configured to, based on the location information, determine a fourth electronic device from a plurality of electronic devices capable of performing communication services with the second electronic device, and schedule communication services between the second electronic device and the fourth electronic device based on the first configuration information.

In yet another aspect, the present disclosure provides an information processing method, applied to a first electronic device, the first electronic device being employed as a sensing management device. The method includes: transmitting a scheduling request to a second electronic device; receiving first notification information sent by the second electronic device based on the scheduling request; generating a sensing signal based on the first notification information; transmitting the sensing signal to a third electronic device; where the scheduling request carries first configuration information; the first configuration information is used to configure sensing service interaction between the first electronic device and the third electronic device; the scheduling request is used to request the second electronic device to schedule communication services based on the first configuration information; and the first notification information is used to indicate that communication service scheduling is complete.

In yet another aspect, the present disclosure provides an information processing method, applied to a second electronic device, the second electronic device being a communication management device. The method comprising: receiving a scheduling request sent by a first electronic device; scheduling communication services based on first configuration information in response to the scheduling request; and transmitting first notification information to the first electronic device, wherein, the scheduling request carries the first configuration information; the first configuration information is used to configure the sensing service interaction between the first electronic device and a third electronic device; the scheduling request is used to request the second electronic device to schedule communication services based on the first configuration information; and the first notification information is used to indicate that communication service scheduling is complete.

An embodiment of the present application provides a first electronic device, a first processor, and the first processor is connected to a first transceiver for generating a scheduling request; the first transceiver is used to send the scheduling request to the second electronic device and receive the first notification information sent by the second electronic device based on the scheduling request; the first processor is also used to generate a perception signal based on the first notification information; the first transceiver is also used to send the perception signal to a third electronic device; wherein the scheduling request carries first configuration information; the first configuration information is used to configure the perception service interaction between the first electronic device and the third electronic device; the scheduling request is used to request the second electronic device to schedule the communication service based on the first configuration information; the first notification information is used to prompt that the communication service scheduling is completed; in this way, a signal carrying the first configuration information for the third electronic device can be sent. A scheduling request for the first configuration information configured for the perception service interaction between an electronic device and a third electronic device is sent to a second electronic device, so that the second electronic device can perform communication service scheduling based on the scheduling request. Afterwards, a perception signal can be generated based on the first notification information sent by the second electronic device to prompt the completion of the communication service scheduling, and the perception signal can be sent to the third electronic device to avoid interference caused by the communication service interaction during the perception service interaction between the first electronic device and the third electronic device, thereby improving the accuracy of the subsequent third electronic device in determining environmental characteristics based on the received perception signal, and solving the problem that the accuracy of the environmental characteristics determined based on the received signal is low due to interference from other signals when receiving the radio signal used to perceive the environment.

### BRIEF DESCRIPTION OF THE DRAWINGS

FIG. 1 is a schematic diagram of the structure of a first electronic device provided in certain embodiments of the present disclosure;
FIG. 2 is a schematic diagram of the structure of a second electronic device provided in certain embodiments of the present disclosure;
FIG. 3 is a schematic diagram of the flow chart of an information processing method provided in certain embodiments of the present disclosure;
FIG. 4 is a schematic diagram of the flow chart of an information processing method provided in certain embodiments of the present disclosure;
FIG. 5 is a schematic diagram of the flow chart of an information processing method provided in certain embodiments of the present disclosure;
FIG. 6 is a schematic diagram of the structure of a communication-sensing integration system provided in certain embodiments of the present disclosure; and

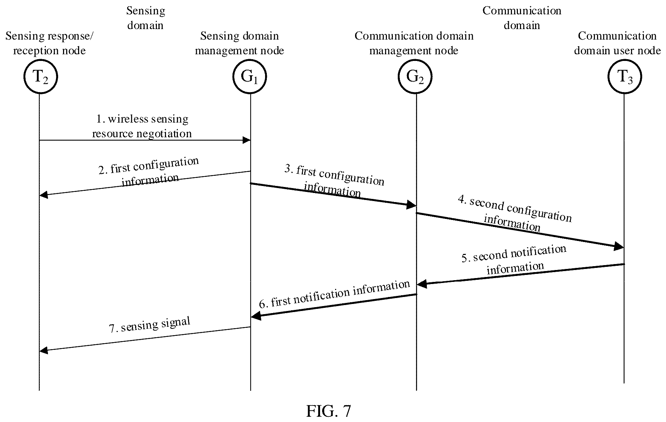

FIG. 7 is a schematic diagram of the workflow of a communication-sensing integration system provided in certain embodiments of the present disclosure.

### DETAILED DESCRIPTION

The following, combined with the accompanying drawings, provides a description of the technical solutions in certain embodiments of the present disclosure.

Embodiments described herein are to illustrate certain features of the present disclosure and are not intended to limit the present disclosure.

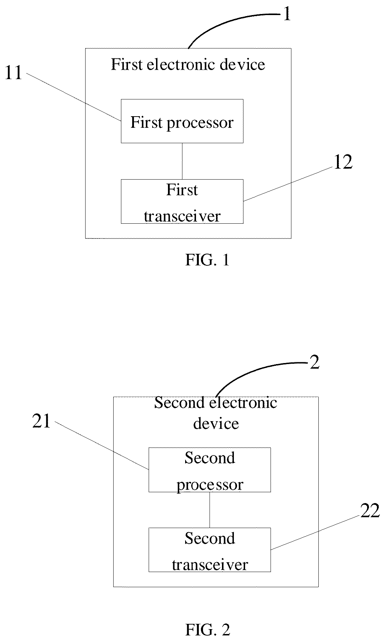

Certain embodiments of the present disclosure provide a first electronic device, which is a sensing management device. As shown in FIG. 1, the first electronic device 1 includes:
a first processor 11, connected to a first transceiver 12, configured to generate a scheduling request;
the first transceiver 12 is configured to transmit the scheduling request to a second electronic device and receive first notification information sent by the second electronic device based on the scheduling request;
the first processor 11 is further configured to generate a sensing signal based on the first notification information;
the first transceiver 12 is further configured to transmit the sensing signal to the third electronic device;
the scheduling request carries first configuration information; the first configuration information is used to configure sensing service interaction between the first electronic device 1 and the third electronic device; the scheduling request is used to request the second electronic device to schedule communication services based on the first configuration information; and the first notification information is used to indicate that the communication service scheduling is complete.

**In** certain embodiments of the present disclosure, the sensing management device may be a sensing management node in the sensing domain; the sensing management node serves as a sensing request (transmitting) node; and the second electronic device may be a sensing response (receiving) node in the sensing domain. In certain embodiments, the first electronic device and the second electronic device may be base station devices, terminals, or other devices, which are not limited in certain embodiments of the present disclosure.

**In** certain embodiments of the present disclosure, the first transceiver may receive a sensing service request sent by a client and transmit the sensing service request to the first processor. The first processor may generate a scheduling request based on the sensing service request and transmit the scheduling request to the first transceiver; where the scheduling request carries first configuration information for configuring the sensing service interaction between the first electronic device and the third electronic device; the first configuration information may be determined by the first processor after receiving the sensing service request; it may also be sent to the first electronic device by a device other than the first electronic device.

Among them, the sensing service request may carry the identification of the third electronic device, and it may not carry the identification of the third electronic device; when the sensing service request does not carry the identification of the third electronic device, the first processor may respond to the sensing service request and determine the third electronic device based on the operating state information of electronic devices other than the first electronic device in the sensing domain.

**In** certain embodiments of the present disclosure, the first transceiver transmits a scheduling request to the second electronic device. The second electronic device receives the scheduling request and may respond to the scheduling request to schedule the communication service. When the second electronic device completes the communication service scheduling, it may generate first notification information and transmit the first notification information to the first electronic device. The first transceiver on the first electronic device receives the first notification information and transmits the first notification information to the first processor, so that the first processor generates a sensing signal when obtaining the first notification information and transmits the sensing signal to the first transceiver. The first transceiver transmits the sensing signal to the third electronic device, thereby realizing the sensing service interaction between the first electronic device and the third electronic device. In this way, since the second electronic device performs communication service scheduling based on the first configuration information, during the sensing service interaction between the first electronic device and the third electronic device, it will not be affected by the communication service interaction in the communication domain, thereby improving the accuracy of the third electronic device's determining the environmental characteristics based on the received sensing signal, thereby improving the accuracy of determining the channel state information based on the environmental characteristics.

Certain embodiments of the present disclosure provides a first electronic device, a first processor, and the first processor is connected to a first transceiver for generating a scheduling request; the first transceiver is used to transmit the scheduling request to the second electronic device and receive the first notification information sent by the second electronic device based on the scheduling request; the first processor is also used to generate a sensing signal based on the first notification information; the first transceiver is also used to transmit the sensing signal to a third electronic device; where the scheduling request carries first configuration information; the first configuration information is used to configure the sensing service interaction between the first electronic device and the third electronic device; the scheduling request is used to request the second electronic device to schedule the communication service based on the first configuration information; the first notification information is used to indicate that the communication service scheduling is completed; in this way, a signal carrying the first configuration information for the third electronic device may be sent. A scheduling request for the first configuration information configured for the sensing service interaction between an electronic device and a third electronic device is sent to a second electronic device, so that the second electronic device may perform communication service scheduling based on the scheduling request. Afterwards, a sensing signal may be generated based on the first notification information sent by the second electronic device to indicate the completion of the communication service scheduling, and the sensing signal may be sent to the third electronic device to avoid interference caused by the communication service interaction during the sensing service interaction between the first electronic device and the third electronic device, thereby improving the accuracy of the subsequent third electronic device's determining environmental characteristics based on the received sensing signal, and solving the problem that the accuracy of the environmental characteristics determined based on the received signal is low due to interference from other signals when the wireless signal used to sense the environment is received.

In certain embodiments of the present disclosure, as shown in FIG. 1, the first processor is further configured to determine first configuration information during resource negotiation between the first electronic device and the third electronic device.

The first processor is further configured to generate a scheduling request based on the first configuration information.

In certain embodiments, after the first processor identifies a third electronic device from among multiple electronic devices capable of interacting with the first electronic device for a sensing service based on a sensing service request, the first electronic device may conduct wireless sensing resource negotiation with the third electronic device to determine sensing-related transmission configuration information; where the first configuration information includes the sensing-related transmission configuration information.

In certain embodiments of the present disclosure, the first processor is further configured to obtain location information of the third electronic device;
The first transceiver is further configured to transmit location information to the second electronic device, so that the second electronic device, based on the location information, determines a fourth electronic device from among a plurality of electronic devices capable of performing communication services with the second electronic device, and schedules communication services between the second and fourth electronic devices based on the first configuration information.

The location information of the third electronic device may be reported by the third electronic device to the first electronic device, may be obtained by the first electronic device detecting the location of the third electronic device, or may be included in a sensing service request.

In certain embodiments, the first processor may transmit the obtained location information of the third electronic device to the first transceiver, and the first transceiver may transmit the location information to the second electronic device, so that the second electronic device determines the fourth electronic device based on the location information of the third electronic device and the location information of electronic devices other than the second electronic device in the communication domain, so as to schedule the communication service between the second electronic device and the fourth electronic device based on the first configuration information.

The second electronic device may determine, from the electronic devices other than the second electronic device in the communication domain, based on the location information of the third electronic device and the location information of the electronic devices other than the second electronic device in the communication domain, an electronic device whose distance to the third electronic device is less than a target distance threshold as the fourth electronic device; the second electronic device may schedule the communication service related to the fourth electronic device on the second electronic device based on the first configuration information, and schedule the communication service related to the second electronic device on the fourth electronic device based on the first configuration information.

In certain embodiments of the present disclosure, the first configuration information includes: identification of the network domain in which the first and third electronic devices reside, transmission configuration information for sensing signals, and transmission configuration information for channel state information determined based on the sensing signals.

The network domain in which the first and third electronic devices reside is referred to as sensing domain; the network domain in which the second and fourth electronic devices reside is referred to as the communication domain. The transmission configuration information for sensing signals includes the transmission resources and transceiver formats of the sensing signals; and the transmission configuration information for channel state information includes configuration information such as the transceiver formats of the channel state information.

**In** certain embodiments of the present disclosure, the identification of the network domain in which the first and third electronic devices reside may be an identity document (ID) of the sensing domain; the transmission resource of the sensing signal includes at least one of the superframe number of the wireless sensing domain, the wireless sensing frame number, the transmission period and duration of the wireless sensing frame, the frequency and bandwidth of the sensing signal.

The first configuration information may include the location information of the third electronic device; the location information may include the physical coordinates of the third electronic device and may further include the angle of the third electronic device relative to the first electronic device and the distance between the third electronic device and the first electronic device.

**In** certain embodiments of the present disclosure, the first transceiver is further configured to receive a sensing service request;
the first processor is further configured to, based on the sensing service request, determine a third electronic device from among a plurality of electronic devices capable of performing sensing service interaction with the first electronic device.

**In** certain embodiments, the first transceiver is used to receive a sensing service request sent by the client and transmit the sensing service request to the first processor, so that the first processor may determine the third electronic device based on the sensing service request; where, the sensing service request may carry the identification of the third electronic device; or the sensing service request may not carry the identification of the third electronic device.

When the sensing service request does not carry the identification of the third electronic device, the sensing service request may be responded to, and based on the operating state information of electronic devices other than the first electronic device in the sensing domain, the electronic device with the best performance among the electronic devices other than the first electronic device in the sensing domain may be determined as the third electronic device.

The first electronic device provided in certain embodiments of the present disclosure may transmit a scheduling request carrying first configuration information for configuring the sensing service interaction between the first electronic device and the third electronic device to the second electronic device, so that the second electronic device may perform communication service scheduling based on the scheduling request, and then generate a sensing signal based on the first notification information sent by the second electronic device to indicate the completion of the communication service scheduling, and transmit the sensing signal to the third electronic device, so as to avoid interference caused by the communication service interaction during the sensing service interaction between the first electronic device and the third electronic device, thereby improving the accuracy of the subsequent third electronic device's determining the environmental characteristics based on the received sensing signal, and solving the problem that when the wireless signal used to sense the environment is received, it is easily interfered with by other signals, resulting in low accuracy of the environmental characteristics determined based on the received signal.

Certain embodiments of the present disclosure provide a second electronic device, which is a communication management device. As shown in FIG. 2, the second electronic device 2 includes:
a second transceiver 22, connected to a second processor 21, configured to receive a scheduling request sent by the first electronic device;
the second processor 21 is configured to respond to the scheduling request and schedule communication services based on the first configuration information;
the second transceiver 22 is further configured to transmit first notification information to the first electronic device;
where the scheduling request carries the first configuration information; the first configuration information is used to configure the sensing service interaction between the first electronic device and the third electronic device; the scheduling request is used to request the second electronic device to schedule communication services based on the first configuration information; and the first notification information is used to indicate that the communication service scheduling is complete.

The second electronic device may be a communication management node in the communication domain.

**In** certain embodiments of the present disclosure, the second transceiver may receive a scheduling request sent by the first electronic device and transmit the scheduling request to the second processor. The second processor may respond to the scheduling request and schedule communication services based on the first configuration information. After the communication service scheduling is completed, the second processor may generate first notification information and transmit the first notification information to the second transceiver. The second transceiver may then transmit the first notification information to the first electronic device to inform the first electronic device that the communication service scheduling is complete. This allows the first electronic device to perform sensing service interaction after the communication service scheduling is complete, thereby avoiding interference by the communication service interaction during the sensing service interaction and improving sensing performance.

**In** certain embodiments, the fourth electronic device may be determined based on the first configuration information, and then the communication service related to the fourth electronic device on the second electronic device may be scheduled based on the first configuration information, and the communication service related to the fourth electronic device and the second electronic device may be scheduled.

Certain embodiments of the present disclosure provide a second electronic device, a second transceiver, and the second transceiver is connected to the second processor and is configured to receive a scheduling request sent by the first electronic device; the second processor is configured to respond to the scheduling request and perform communication service scheduling based on the first configuration information; the second transceiver is further configured to transmit first notification information to the first electronic device; where the scheduling request carries the first configuration information; the first configuration information is used to configure the sensing service interaction between the first electronic device and the third electronic device; the scheduling request is used to request the second electronic device to perform communication service scheduling based on the first configuration information; the first notification information is used to indicate that the communication service scheduling is complete; in this way, the second electronic device may respond to the scheduling request, perform communication service scheduling based on the first configuration information, and then transmit the first notification information for notifying the completion of the communication service scheduling to the first electronic device, so that the first electronic device may perform sensing service interaction with the third electronic device after receiving the first notification information, thereby avoiding interference caused by the communication service interaction during the sensing service interaction between the first electronic device and the third electronic device, improving the accuracy of the subsequent determination of environmental characteristics by the third electronic device based on the received sensing signal, and solving the problem that when wireless signals used for sensing the environment are received, they are easily interfered with by other signals, resulting in low accuracy of environmental characteristics determined based on the received signals.

**In** certain embodiments of the present disclosure, as shown in FIG. 2, the second processor is further configured to, in response to a scheduling request, determine a fourth electronic device from electronic devices capable of interacting with the second electronic device for communication services, generate second configuration information based on the first configuration information, and schedule communication services associated with the fourth electronic device on the second electronic device based on the second configuration information; where the second configuration information is used to schedule communication services between the second and the fourth electronic devices;

The second transceiver is further configured to transmit the second configuration information to the fourth electronic device and receive second notification information sent by the fourth electronic device based on the second configuration information; where the second notification information is used to notify that the fourth electronic device's scheduling of communication services associated with the second electronic device is complete.

The fourth electronic device may be all electronic devices capable of exchanging communication services with the second electronic device, or may be a subset of electronic devices capable of exchanging communication services with the second electronic device.

**In** certain embodiments, the second processor may, in response to the scheduling request, determine the fourth electronic device from the electronic devices capable of exchanging communication services with the second electronic device based on the first configuration information, generate second configuration information for scheduling communication services between the second and fourth electronic devices based on the first configuration information, and schedule blank frames at corresponding wireless frame positions based on the second configuration information to avoid interference with reception of sensing signals within the sensing domain. The second configuration information may be understood as blank frame configuration information.

**In** certain embodiments, the second electronic device may perform a blank frame configuration on the communication service related to the fourth electronic device on the second electronic device based on the second configuration information, so that the second electronic device does not transmit data to the fourth electronic device within the configured blank frame during the communication service interaction with the fourth electronic device; the fourth electronic device may perform a blank frame configuration on the communication service related to the fourth electronic device and the second electronic device based on the second configuration information, so that the fourth electronic device does not transmit data to the second electronic device within the configured blank frame configuration during the communication service interaction with the second electronic device; in this way, interference with the sensing service interaction between the first electronic device and the third electronic device in the sensing domain is avoided when the communication service interaction between the second electronic device and the fourth electronic device is performed, and the accuracy of the third electronic device's determining the signal status information based on the received sensing signal during the sensing service interaction between the first electronic device and the third electronic device is improved.

**In** certain embodiments of the present disclosure, the second processor is further configured to generate first notification information upon determining that scheduling of communication services related to the fourth electronic device on the second electronic device is complete and receiving the second notification information.

**In** certain embodiments, upon completing scheduling of communication services related to the second electronic device on the fourth electronic device based on the second configuration information, the fourth electronic device generates second notification information and transmits the second notification information to the second electronic device. Upon receiving the second notification information and upon completing scheduling of communication services related to the fourth electronic device, the second processor generates first notification information and transmits the first notification information to the second transceiver, which may then transmit the first notification information to the first electronic device. Upon determining that scheduling of communication services between the second electronic device and the fourth electronic device is complete, the first electronic device determines that the sensing service interaction between the first electronic device and the third electronic device will not be affected by the communication service interaction. The first electronic device transmits a sensing signal to the third electronic device for sensing service interaction, so that the third electronic device receives only the sensing signal and no longer receives signals related to the communication service interaction. This prevents interference with the received sensing signal and improves the accuracy of channel state information determined based on the received sensing signal.

**In** certain embodiments of the present disclosure, the second transceiver is further configured to receive location information of the third electronic device transmitted by the first electronic device;
the second processor is further configured to, based on the location information, determine a fourth electronic device from among a plurality of electronic devices capable of performing communication services with the second electronic device.

**In** certain embodiments, the second processor may generate an obtaining instruction for obtaining the location information of the third electronic device, the second transceiver may transmit the acquisition instruction to the first electronic device, and then the second transceiver may receive the location information of the third electronic device sent by the first electronic device based on the acquisition instruction. In certain embodiments, the location information of the third electronic device may be sent by the first electronic device to the fourth electronic device.

The second processor may obtain location information of electronic devices other than the second electronic device in the communication domain, and based on the location information of the electronic devices other than the second electronic device and the location information of the third electronic device, determine the distance between the third electronic device and each electronic device in the communication domain other than the second electronic device, and determine that the electronic device corresponding to the distance less than the target distance threshold among the electronic devices other than the second electronic device in the communication domain is the fourth electronic device. The number of the fourth electronic device may be at least one.

The second electronic device provided in certain embodiments of the present disclosure may respond to a scheduling request, schedule communication services based on the first configuration information, and then transmit first notification information to the first electronic device for notifying the completion of the communication service scheduling, so that the first electronic device may perform sensing service interaction with the third electronic device after receiving the first notification information, thereby avoiding interference caused by communication service interaction during the sensing service interaction between the first electronic device and the third electronic device, improving the accuracy of the subsequent third electronic device's determining environmental characteristics based on the received sensing signal, and solving the problem that when wireless signals for sensing the environment are received, the wireless signals are easily interfered with by other signals, resulting in low accuracy of environmental characteristics determined based on the received signal.

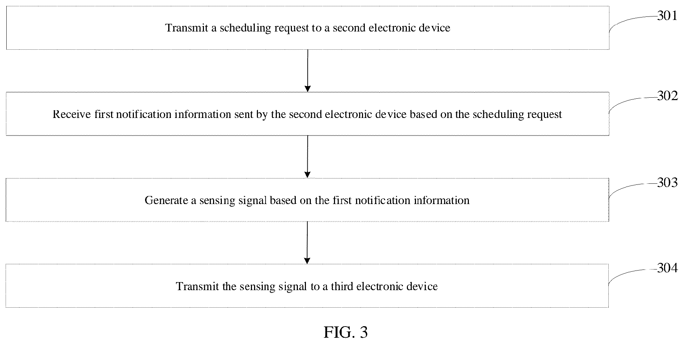

Certain embodiments of the present disclosure further provide an information processing method, applied to the first electronic device. As shown in FIG. 3, the information processing method may include:
Step 301: Transmit a scheduling request to a second electronic device.
Step 302: Receive first notification information sent by the second electronic device based on the scheduling request.
Step 303: Generate a sensing signal based on the first notification information.
Step 304: Transmit the sensing signal to a third electronic device.

The scheduling request includes first configuration information; the first configuration information is used to configure the interaction of the sensing service between the first electronic device and the third electronic device; the scheduling request is used to request the second electronic device to schedule the communication service based on the first configuration information; and the first notification information is used to indicate the completion of the communication service scheduling.

Steps 301-304 may be implemented in the first electronic device as described in the corresponding embodiments of FIG. 1 and will not be further described here.

Certain embodiments of the present disclosure provide information processing method, which includes transmitting a scheduling request to a second electronic device; receiving first notification information sent by the second electronic device based on the scheduling request; generating a sensing signal based on the first notification information; and transmitting the sensing signal to a third electronic device. The scheduling request carries first configuration information; the first configuration information is used to configure the sensing service interaction between the first electronic device and the third electronic device; the scheduling request is used to request the second electronic device to perform communication service scheduling based on the first configuration information; and the first notification information is used to indicate that the communication service scheduling is completed. The scheduling request carrying the first configuration information for configuring the sensing service interaction between the first electronic device and the third electronic device may be sent to the second electronic device, so that the second electronic device may perform communication service scheduling based on the scheduling request. Subsequently, a sensing signal may be generated based on the first notification information sent by the second electronic device to indicate that the communication service scheduling is completed, and the sensing signal may be sent to the third electronic device, so as to avoid interference caused by the communication service interaction during the sensing service interaction between the first electronic device and the third electronic device, thereby improving the accuracy of the subsequent determination of environmental characteristics by the third electronic device based on the received sensing signal, and solving the problem that when wireless signals for sensing the environment are received, they are easily interfered with by other signals, resulting in low accuracy of environmental characteristics determined based on the received signals.

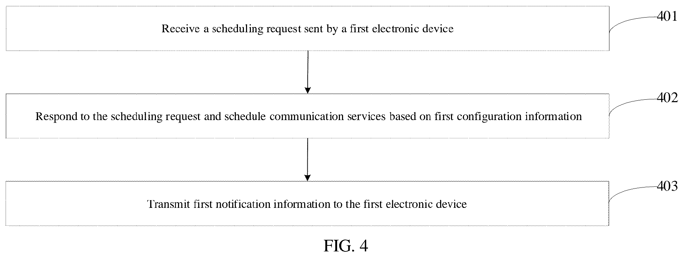

Certain embodiments of the present disclosure further provide an information processing method, applied to the second electronic device. As shown in FIG. 4, the information processing method may include:
Step 401: Receive a scheduling request sent by a first electronic device.
Step 402: Respond to the scheduling request and schedule communication services based on first configuration information.
Step 403: Transmit first notification information to the first electronic device.

The scheduling request includes first configuration information; the first configuration information is used to configure the interaction of the sensing service between the first electronic device and the third electronic device; the scheduling request is used to request the second electronic device to schedule the communication service based on the first configuration information; and the first notification information is used to indicate the completion of the communication service scheduling.

Steps 401-403 may be implemented in the second electronic device as described in the corresponding embodiments of FIG. 2 and will not be further described here.

Certain embodiments of the present disclosure provide an information processing method, which includes receiving a scheduling request sent by a first electronic device; responding to the scheduling request, and scheduling communication services based on first configuration information; and transmitting first notification information to the first electronic device; where the scheduling request carries the first configuration information; the first configuration information is used to configure the sensing service interaction between the first electronic device and the third electronic device; the scheduling request is used to request the second electronic device to schedule communication services based on the first configuration information; the first notification information is used to indicate that the communication service scheduling is completed; the second electronic device may respond to the scheduling request, schedule communication services based on the first configuration information, and then transmit the first notification information for notifying the completion of the communication service scheduling to the first electronic device, so that the first electronic device may perform sensing service interaction with the third electronic device after receiving the first notification information, avoiding interference caused by communication service interaction during the sensing service interaction between the first electronic device and the third electronic device, improving the accuracy of the subsequent third electronic device's determining environmental characteristics based on the received sensing signal, and solving the problem that when wireless signals for perceiving the environment are received, the wireless signals are easily interfered with by other signals, resulting in low accuracy of environmental characteristics determined based on the received signals.

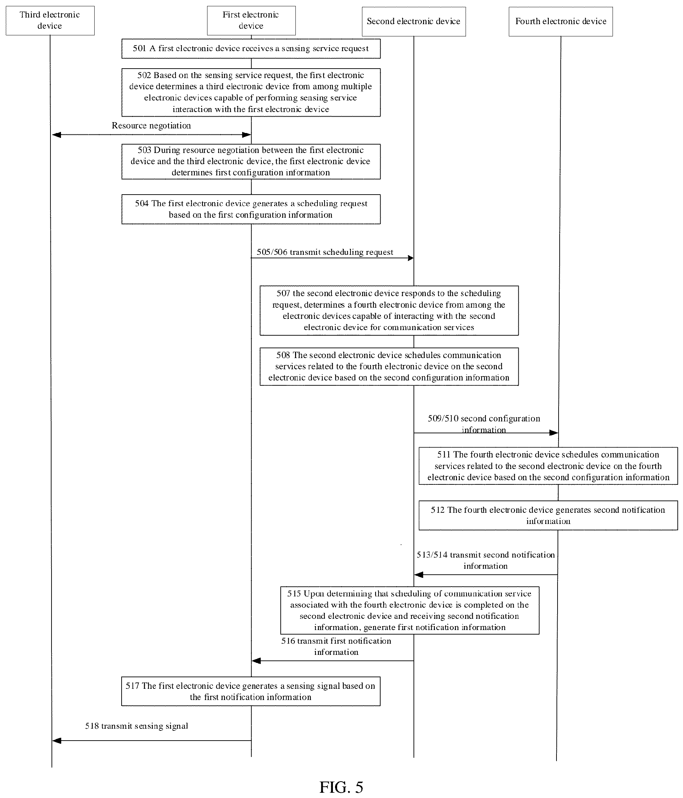

Certain embodiments of the present disclosure further provide an information processing method, as shown in FIG. 5, the method includes:
Step 501: A first electronic device receives a sensing service request.
Step 502: Based on the sensing service request, the first electronic device determines a third electronic device from among multiple electronic devices capable of performing sensing service interaction with the first electronic device.
Step 503: During resource negotiation between the first electronic device and the third electronic device, the first electronic device determines first configuration information.
Step 504: The first electronic device generates a scheduling request based on the first configuration information.
Step 505: The first electronic device transmits the scheduling request to the second electronic device.
Step 506: The second electronic device receives the scheduling request sent by the first electronic device.

At step 507, the second electronic device responds to the scheduling request, determines a fourth electronic device from among the electronic devices capable of interacting with the second electronic device for communication services, and generates second configuration information based on the first configuration information.

Step 507, namely determining the fourth electronic device from among the electronic devices capable of interacting with the second electronic device for communication services in response to the scheduling request may be accomplished through steps a1 and a2:
a1. The second electronic device receives the location information of the third electronic device sent by the first electronic device.
a2. Based on the location information, the second electronic device determines a fourth electronic device from among multiple electronic devices that may interact with the second electronic device for communication services.

Step 508. The second electronic device schedules communication services related to the fourth electronic device on the second electronic device based on the second configuration information.

The second configuration information is used to schedule communication services between the second electronic device and the fourth electronic device.

Step 509: The second electronic device transmits the second configuration information to the fourth electronic device.

Step 510: The fourth electronic device receives the second configuration information.

Step 511: The fourth electronic device schedules communication services related to the second electronic device on the fourth electronic device based on the second configuration information.

Step 512: The fourth electronic device generates second notification information.

The second notification information is used to notify that the communication service scheduling related to the second electronic device on the fourth electronic device has been completed.

Step 513: The fourth electronic device transmits the second notification information to the second electronic device.

Step 514: The second electronic device receives the second notification information sent by the fourth electronic device.

The second notification information is used to notify that the scheduling of the communication service associated with the second electronic device on the fourth electronic device has been completed.

Step 515: Upon determining that the scheduling of the communication service associated with the fourth electronic device has been completed on the second electronic device and receiving the second notification information, the first notification information is generated.

Step 516: The second electronic device transmits the first notification information to the first electronic device.

Step 517: The first electronic device generates a sensing signal based on the first notification information.

Step 518: Transmit the sensing signal to the third electronic device.

Steps 501 through 518 may be implemented in the first and second electronic devices as described in certain embodiments corresponding to FIGs. 1 and 2, and are not further described here.

The information processing method provided in certain embodiments of the present disclosure may transmit a scheduling request carrying first configuration information for configuring the sensing service interaction between the first electronic device and the third electronic device to the second electronic device, so that the second electronic device may perform communication service scheduling based on the scheduling request. Thereafter, a sensing signal may be generated based on the first notification information sent by the second electronic device to indicate the completion of the communication service scheduling, and the sensing signal may be sent to the third electronic device to avoid interference caused by the communication service interaction during the sensing service interaction between the first electronic device and the third electronic device, thereby improving the accuracy of the subsequent third electronic device's determining the environmental characteristics based on the received sensing signal, and solving the problem that when wireless signals for sensing the environment are received, the wireless signals are easily interfered with by other signals, resulting in low accuracy of the environmental characteristics determined based on the received signals.

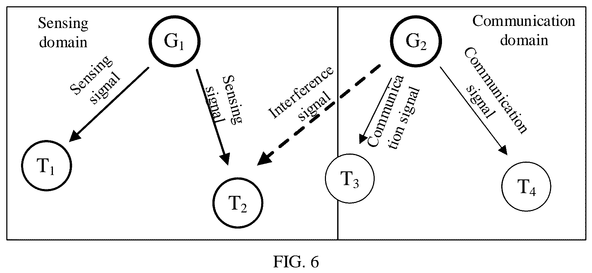

Certain embodiments of the present disclosure further provide a communication-sensing integration system. As shown in FIG. 6, the communication-sensing integration system includes a sensing domain and a communication domain. The sensing domain includes a first electronic device and a device in the sensing domain for sensing and responding, with the first electronic device serving as a sensing management node in the sensing domain. The communication domain includes a second electronic device and a user device (for example, a user node) in the communication domain, with the second electronic device serving as a communication management node in the communication domain.

The first electronic device is represented by G1, and the second electronic device is represented by G2. The devices (nodes) in the sensing domain for sensing and responding may be represented by T1 and T2. The user nodes in the communication domain are represented by T3 and T4.

Within the sensing domain covered by node G1, G1 acts as the sensing request and sensing signal transmitter, performing collaborative sensing with nodes T1 and T2, which act as sensing response and sensing reception nodes. G1 transmits sensing signals, and upon receiving them, nodes T1 and T2 determine environmental characteristics, perform channel estimation based on these characteristics, and obtain channel state information. The channel state information is then sent back to G1 (for example, sensing data). Within the adjacent communication domain, node G2 communicates data with nodes T3 and T4 within its coverage area. Because sensing and communication signals are transmitted simultaneously over the G link, interference is inevitably generated on the received signals of edge nodes. For the communication domain, interference cancellation algorithms or interference whitening techniques may be employed to eliminate or minimize the impact of interference. However, for sensing, changes in channel state information are crucial to the sensing results. Nodes receiving sensing signals are particularly unable to distinguish whether changes are in the sensing target or changes are in channel state caused by data transmission in adjacent communication domains, severely degrading sensing performance.

In certain embodiments of the present disclosure, when the sensing domain and the communication domain are adjacent, newly introduced inter-domain signaling is exchanged between domain management nodes to coordinate the air interface resources of the communication domain and configure certain wireless frames in the adjacent communication domain as blank frames. This eliminates interference between data transmission in the communication domain and the reception of sensing signals in the sensing domain, thereby improving sensing performance. The following detailed explanation of the information processing method provided in certain embodiments of the present disclosure is based on implementation scenarios.

As shown in FIG. 6, G1 is the management node in the sensing domain, and G2 is the management node in the communication domain; after the G1 node receives the sensing service request sent by the client, it may select a node for sensing response within the coverage range based on the sensing service request. As shown in FIG. 6, it is assumed that the node selected for sensing response is T2. After determining T2, G1 and T2 may negotiate wireless sensing resources and determine sensing-related transmission configuration information, for example, the first configuration information, during the wireless sensing resource negotiation process; the G1 node may transmit the first configuration information to the T2 node, so that the T2 node receives the sensing signal and processes the sensing signal based on the first configuration information.

The first configuration information may include the domain ID of the sensing domain, transmission configuration information for the sensing signal, and transmission configuration information for the channel state information.

In certain embodiments, the transmission configuration information for the sensing signal includes the transmission resources and the transceiver format of the sensing signal; the transmission configuration information for the channel state information includes configuration information such as the transceiver format of the channel state information. The transmission resources for the sensing signal include at least one of the superframe number of the wireless sensing domain, the wireless sensing frame number, the transmission period and duration of the wireless sensing frame, the frequency of the sensing signal, and the bandwidth.

The G1 node may transmit the first configuration information (for example, the wireless frame configuration for wireless sensing) to the G2 node in the adjacent communication domain, thereby realizing inter-domain signaling interaction, whereby the management node G1 in the sensing domain transmits the determined wireless frame configuration for wireless sensing to the management node G2 in the adjacent communication domain; the G2 node receives the wireless frame configuration of the adjacent sensing domain, sets and schedules the corresponding blank frame in the communication domain, and avoids interfering with the sensing signal reception in the adjacent sensing domain.

When the scheduling request carries the location information of node T2, G2 may schedule blank frames only for nodes in the communication domain near that location, while continuing to communicate with other nodes in the communication domain. After a scheduled node in the communication domain (assuming it's T3) successfully configures a blank frame, T3 will not transmit data to G2 during subsequent communications with G2. Furthermore, G2 itself will not transmit data to T3 during configured blank frames. Once both G2 and T3 have configured blank frames, G1 and T2 in the sensing domain may transmit sensing signals during the configured wireless sensing frames, allowing T2 to perform channel estimation based on the received sensing signals. In this way, in an integrated communication-sensing integration system, when the sensing area and communication area are adjacent, air interface resources are coordinated between domain management nodes to configure certain wireless frames in the adjacent communication domain as blank frames. This eliminates interference between data transmission in the communication domain and sensing signals in the sensing domain, thereby improving sensing performance.

Embodiments of the present disclosure provide a computer-readable storage medium storing one or more programs. These programs may be executed by one or more processors to implement the steps of the information processing method provided in the corresponding embodiments of FIG. 1 or FIG. 2

The computer-readable storage medium may be a memory device such as a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface mount device, an optical disk, or a compact disc read-only memory (CD-ROM). Alternatively, the computer-readable storage medium may include any one or any combination of the aforementioned memories, such as a mobile phone, a computer, a tablet device, a personal digital assistant, and the like.

**In** certain embodiments, the terms "comprise" and "include" or any other variations thereof are intended to encompass non-exclusive inclusion, such that a process, method, article, or apparatus comprising a series of elements includes not only those elements but also other elements not explicitly listed, or elements inherent to such process, method, article, or apparatus. In the absence of further limitations, an element defined by the phrase "comprising a ..." does not exclude the presence of other identical elements in the process, method, article, or apparatus comprising the element.

The serial numbers of certain embodiments of the present disclosure are for descriptive purposes only and do not represent the superiority or inferiority of certain embodiments.

Through the above description of certain embodiments, those skilled in the technical field will understand that the methods of certain embodiments described above may be implemented using software and a necessary general-purpose hardware platform. Hardware may also be used, but in many cases the former is the preferred implementation method. Based on this understanding, the technical solution of the present disclosure, may be embodied in the form of a software product. This computer software product is stored in a storage medium (such as ROM/RAM, a magnetic disk, or an optical disk) and includes instructions for enabling a terminal device (such as a mobile phone, computer, server, air conditioner, or network device) to execute the methods described in certain embodiments of the present disclosure.

The present disclosure is described with reference to the flowcharts and/or block diagrams of the methods, devices (systems), and computer program products according to certain embodiments of the present disclosure. Each process and/or box in the flowchart and/or block diagram, as well as the combination of the processes and/or boxes in the flowchart and/or block diagram, may be implemented by computer program instructions. These computer program instructions may be provided to a processor of a general-purpose computer, a special-purpose computer, an embedded processor, or other programmable data processing device to produce a machine, so that the instructions executed by the processor of the computer or other programmable data processing device generate a device for implementing the functions specified in one or more processes in the flowchart and/or one or more boxes in the block diagram.

These computer program instructions may also be stored in a computer-readable memory that may direct a computer or other programmable data processing device to operate in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operating steps are executed on the computer or other programmable device to produce a computer-implemented process, so that the instructions executed on the computer or other programmable device provide steps for implementing the functions specified in one or more processes in the flowchart and/or one or more boxes in the block diagram.

The above reflect certain embodiments of the present disclosure and do not limit the patent scope of the present disclosure. Any equivalent structure or equivalent process transformation made using the contents of the present disclosure specification and drawings, or directly or indirectly applied in other related technical fields, are also included in the patent protection scope of the present disclosure.

## Claims

1. A first electronic device, wherein the first electronic device is a sensing management device, comprising:
a first processor, connected to a first transceiver, and configured to generate a scheduling request;
the first transceiver, configured to transmit the scheduling request to a second electronic device and receive first notification information sent by the second electronic device based on the scheduling request;
the first processor, further configured to generate a sensing signal based on the first notification information; and
the first transceiver, further configured to transmit the sensing signal to a third electronic device,
wherein:
the scheduling request carries first configuration information; the first configuration information is used to configure sensing service interaction between the first electronic device and the third electronic device; the scheduling request is used to request the second electronic device to schedule communication services based on the first configuration information; and the first notification information is used to indicate that communication service scheduling is complete.

2. The first electronic device of claim 1, wherein the first processor is further configured to determine the first configuration information during resource negotiation between the first electronic device and the third electronic device; and the first processor is further configured to generate the scheduling request based on the first configuration information.

3. The first electronic device of claim 1, wherein the first processor is further configured to obtain location information of the third electronic device; and the first transceiver is further configured to transmit the location information to the second electronic device, so that the second electronic device, based on the location information, determines a fourth electronic device from among a plurality of electronic devices capable of performing communication services with the second electronic device, and schedules communication services between the second electronic device and the fourth electronic device based on the first configuration information.

4. The first electronic device of claim 2, wherein the first configuration information includes: an identification of a network domain in which the first electronic device and the third electronic device are located, transmission configuration information of the sensing signal, and transmission configuration information of channel state information determined based on the sensing signal.

5. The first electronic device of claim 4, wherein the identification of the network domain includes an identity document of the sensing domain; the transmission configuration information of the sensing signal includes at least one of a frame number, a superframe number, a transmission period, a duration, a frequency and a bandwidth of a wireless frame used to receive the sensing signal; and the first configuration information also includes location information of the third electronic device.

6. The first electronic device of claim 1, wherein the first transceiver is further configured to receive a sensing service request; and the first processor is further configured to, based on the sensing service request, determine the third electronic device from a plurality of electronic devices capable of performing sensing service interaction with the first electronic device.

7. A second electronic device, wherein the second electronic device is a communication management device, comprising:
a second transceiver, connected to a second processor, and configured to receive a scheduling request sent by a first electronic device;
the second processor, configured to schedule communication services based on first configuration information in response to the scheduling request; and
the second transceiver, further configured to transmit first notification information to the first electronic device,
wherein:
the scheduling request carries the first configuration information; the first configuration information is used to configure the sensing service interaction between the first electronic device and a third electronic device; the scheduling request is used to request the second electronic device to schedule communication services based on the first configuration information; and the first notification information is used to indicate that communication service scheduling is complete.

8. The second electronic device of claim 7, wherein the second transceiver is further configured to receive location information of the third electronic device transmitted by the first electronic device; and the second processor is further configured to, based on the location information, determine a fourth electronic device from a plurality of electronic devices capable of performing communication services with the second electronic device, and schedule communication services between the second electronic device and the fourth electronic device based on the first configuration information.

9. An information processing method, applied to a first electronic device, the first electronic device being a sensing management device, the method comprising:
transmitting a scheduling request to a second electronic device;
receiving first notification information sent by the second electronic device based on the scheduling request;
generating a sensing signal based on the first notification information; and
transmitting the sensing signal to a third electronic device,
wherein:
the scheduling request carries first configuration information; the first configuration information is used to configure sensing service interaction between the first electronic device and the third electronic device; the scheduling request is used to request the second electronic device to schedule communication services based on the first configuration information; and the first notification information is used to indicate that communication service scheduling is complete.

10. An information processing method, applied to a second electronic device, the second electronic device being a communication management device, the method comprising:
receiving a scheduling request sent by a first electronic device;
scheduling communication services based on first configuration information in response to the scheduling request; and
transmitting first notification information to the first electronic device,
wherein:
the scheduling request carries the first configuration information; the first configuration information is used to configure the sensing service interaction between the first electronic device and a third electronic device; the scheduling request is used to request the second electronic device to schedule communication services based on the first configuration information; and the first notification information is used to indicate that communication service scheduling is complete.
